Europäisches Patentamt

European Patent Office

Office européen des brevets

(11) Veröffentlichungsnummer: **0 078 877**
**A1**

(12) ## EUROPÄISCHE PATENTANMELDUNG

(21) Anmeldenummer: **82104102.7**

(22) Anmeldetag: **12.05.82**

(51) Int. Cl.³: **B 62 J 5/00**

(30) Priorität: **10.11.81 DE 3144595**

(43) Veröffentlichungstag der Anmeldung:
**18.05.83 Patentblatt 83/20**

(84) Benannte Vertragsstaaten:
**AT BE CH DE FR GB IT LI LU NL SE**

(71) Anmelder: **Stahlmann, Gerhard**
**Vestische Strasse 255**
**D-4200 Oberhausen(DE)**

(72) Erfinder: **Stahlmann, Gerhard**
**Vestische Strasse 255**
**D-4200 Oberhausen(DE)**

(74) Vertreter: **Niemann, Uwe, Dr.-Ing.**
**Ahornstrasse 41**
**D-4300 Essen 1(DE)**

(54) **Fahrradbeleuchtung.**

(57) Die Erfindung betrifft eine Fahrradbeleuchtung mit Dynamo und wenigstens einer Leuchte. Um die Sicherheit eines Radfahrers im Verkehr, insbesondere bei einem Halt, zu verbessern, ist der Dynamo (1) zusätzlich an dem Primärteil (Erregerteil) eines Relais (6) angeschlossen, dessen Sekundärteil einerseits mit einem galvanischen Element (8) verbunden und andererseits über einen Schalter (4) an die Leuchte (2) anschließbar ist.

EP 0 078 877 A1

**0078877**

## Fahrradbeleuchtung

Die Erfindung betrifft eine Fahrradbeleuchtung mit Dynamo und wenigstens einer Leuchte.

Übliche Fahrradbeleuchtungen bestehen aus einem Dynamo, der an der Vorderradgabel befestigt ist und zur Inbetriebnahme gegen das Vorderrad geschwenkt werden kann, sowie aus einem Scheinwerfer und einer Rückleuchte, die beide an den Dynamo angeschlossen sind. Der Dynamo liefert nur solange Strom an die Leuchten, wie das Fahrrad in Bewegung gehalten wird. Wenn der Radfahrer sich bei Dunkelheit im öffentlichen Verkehr bewegt und beispielsweise an einer Kreuzung vor einer Ampel halten muß, erlischt die Beleuchtung am Fahrrad, und der Radfahrer ist einem erheblichen Sicherheitsrisiko ausgesetzt. Hier will die Erfindung Abhilfe schaffen. - Es gab oder gibt zwar Fahrradbeleuchtungen, bei denen als Stromquelle eine Batterie oder dergleichen eingesetzt wird, das hat aber den Nachteil, daß die Batterie sich sehr schnell erschöpft und daß der Radfahrer, wenn er keine Ersatzbatterie bei sich hat, einem noch höheren Sicherheitsrisiko ausgesetzt ist.

Aufgabe der Erfindung ist es, die Sicherheit eines Radfahrers im Verkehr, insbesondere bei einem Halt, zu verbessern.

Diese Aufgabe wird bei einer Fahrradbeleuchtung der eingangs beschriebenen Gattung dadurch gelöst, daß der Dynamo zusätzlich an den Primärteil (Erregerteil) eines Relais angeschlossen ist, dessen Sekundärteil einerseits mit einem galvanischen Element verbunden und andererseits über einen Schalter an die Leuchte anschließbar ist.

Bei der erfindungsgemäßen Fahrradbeleuchtung erhalten die Leuchten ihre elektrische Energie nach wie vor vom Dynamo, solange das Fahrrad in Bewegung ist. Gleichzeitig sind jedoch die Leuchten über das Relais und den Schalter an das galvanische Element angeschlossen, welches eine Batterie oder ein Akkumulator sein kann. Während der Fahrt des Fahrrades wird jedoch bei gelegtem Schalter die Verbindung zwischen galvanischem Element und Leuchten durch das Relais unterbrochen, weil dessen Erregerteil vom Dynamo gespeist wird. Hält der Radfahrer an, dann liefert der Dynamo keine elektrische Energie mehr an den Erregerteil des Relais, das folglich in seine Ruhestellung zurückfällt, bei der die Verbindung zwischen dem galvanischen Element und den Leuchten hergestellt wird. Dementsprechend erfolgt die Versorgung der Leuchten mit elektrischer Energie bei einem Halt vom galvanischen Element. Die Umschaltung des Relais erfolgt automatisch in Abhängigkeit vom Betriebszustand des Dynamos, d.h. vom Bewegungszustand des Fahrrades. Wird das Fahrrad nach einem Halt wieder in Bewegung gesetzt, dann zieht das Relais praktisch schon nach der zweiten Umdrehung des Dynamos an, also unmittelbar nach dem Ingangsetzen des Fahrrades. Das Relais kann ein elektromagnetisches oder auch ein elektronisches Relais sein. Wird ein elektromagnetisches Relais verwendet, dann sollte dieses als Wechselstromrelais ausgebildet sein. Bei Verwendung eines elektromagnetischen Gleichstromrelais ist es erforderlich, zwischen Dynamo und Relais einen Gleichrichter zu schalten.

Zweckmäßig sollte die Verbindung zwischen Dynamo und Leuchte über den Schalter gehen. Dann muß zwar zum Einschalten der Beleuchtung nicht nur der Dynamo gegen das Vorderrad gekippt, sondern auch der Schalter gelegt werden, dafür ist aber sichergestellt, daß bei jedem Halt die automatische Umschaltung des Relais erfolgt, und die Leuchten auch während eines Halts mit Strom versorgt werden.

Ist das galvanische Element eine Batterie von z.B. 6 V, 2 Ah, dann reicht die Energie bei normaler Betriebsweise ca. 40 Tage.

Ist das galvanische Element ein Akkumulator, dann kann der Dynamo zusätzlich über einen Gleichrichter auch an den Akkumulator angeschlossen sein, der dann beispielsweise während der Tagfahrten aufgeladen werden kann.

Reicht die Leistung eines Dynamos nicht aus, dann können auch zwei Dynamos eingesetzt werden, von denen der eine die Leuchte und der andere das Relais bzw. den Akkumulator versorgt.

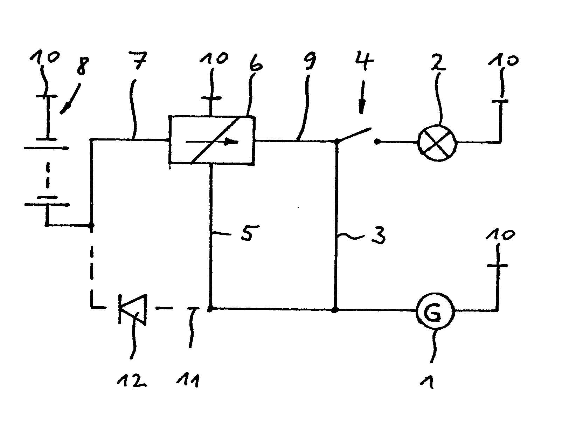

Im folgenden wird ein in der Zeichnung dargestelltes Ausführungsbeispiel der Erfindung erläutert; die einzige Figur zeigt ein Schaltbild einer Fahrradbeleuchtung.

Die in der Zeichnung dargestellte Fahrradbeleuchtung besteht in ihrem grundsätzlichen Aufbau aus einem Dynamo 1, der üblicherweise an einer Radgabel befestigt und gegen das zugeordnete Rad geschwenkt werden kann, sowie aus einem Scheinwerfer und einem Rücklicht, die in der Zeichnung durch eine Leuchte 2 wiedergegeben sind.

In einer Verbindungsleitung 3 zwischen Dynamo 1 und Leuchte 2 liegt ein Schalter 4, der beispielsweise an der Lenkstange des Fahrrades angebracht ist. Von der Verbindungsleitung 3 führt eine Zweigleitung 5 zum Primärteil (Erregerteil) eines Relais 6, dessen Sekundärteil einerseits über eine Leitung 7 mit einem galvanischen Element 8 und andererseits über eine Leitung 9 mit dem Schalter 4 verbunden ist.

Wie in der Zeichnung dargestellt, sind alle Teile an Masse 10, d.h. den Rahmen des Fahrrades, angeschlossen, das galvanische Element 8 mit seinem Minuspol und das Relais 6 mit seinem Primärteil.

Das Relais 6 ist beim Ausführungsbeispiel ein elektromechanisches Relais. Es kann aber auch ein elektronisches Relais sein. Das galvanische Element 8 ist beim dargestellten Ausführungsbeispiel eine Batterie, es kann aber auch ein wiederaufladbarer Akkumulator sein. Im letzteren Fall besteht die Möglichkeit, den Akkumulator über eine weitere, gestrichelt gezeichnete Zweigleitung 11 mit einem Gleichrichter 12 an den Dynamo 1 anzuschließen.

Die dargestellte Fahrradbeleuchtung funktioniert wie folgt: Zum Einschalten der Beleuchtung wird der Dynamo 1 gegen das zugeordnete Rad gekippt und wird der Schalter 4 geschlossen. Solange sich das Fahrrad in Bewegung befindet, wird die Leuchte 2 vom Dynamo 1 mit elektrischer Energie versorgt. Gleichzeitig wird auch der Erregerteil des Relais 6 mit elektrischer Energie versorgt, so daß die Verbindung zwischen dem galvanischen Element 8 und der Leuchte 2 unterbrochen ist. Wenn das Fahrrad anhält, liefert der Dynamo 1 keine elektrische Energie mehr, und die Erregung des Relais 6 wird unterbrochen. Nunmehr fällt der Sekundärteil des Relais 6 in seine Ruhestellung zurück und schließt den Stromkreis zwischen dem galvanischen Element 8 und der Leuchte 2, die folglich während des Halts vom galvanischen Element 8 versorgt wird. Wenn das Fahrrad wieder in Bewegung gesetzt wird, zieht das Relais 6 an und unterbricht die Verbindung zwischen dem galvanischen Element 8 und der Leuchte 2, die nunmehr wieder vom Dynamo 1 versorgt wird.

Wenn das galvanische Element 8 ein wiederaufladbarer Akkumulátor ist und die Zweigleitung 11 mit Gleichrichter 12 installiert ist, kann der Akkumulator vom Dynamo 1 aufgeladen werden, z.B. bei Tagesfahrten.

Wenn die Leistung eines Dynamos 1 nicht ausreicht, können auch zwei Dynamos installiert werden, von denen der eine die Leuchte 2 und der andere das Relais 6 bzw. den Akkumulator versorgt.

Dr.-Ing **Uwe Niemann**
Patentanwalt

Ahornstraße 41 4300 Essen 1
Telefon (0201) 471303

0078877

82 1 0 4 1 0 2 . 7

Patentanwalt Dr.-Ing U Niemann, Ahornstr 41 4300 Essen 1

Ihr Zeichen
Betr

Mein Zeichen **82 070**       Datum

Gerhard Stahlmann, Vestische Str. 255, 4200 Oberhausen 11

## P a t e n t a n s p r ü c h e

1. Fahrradbeleuchtung mit Dynamo und wenigstens einer Leuchte, d a d u r c h g e k e n n z e i c h n e t , daß der Dynamo (1) zusätzlich an den Primärteil (Erregerteil) eines Relais (6) angeschlossen ist, dessen Sekundärteil einerseits mit einem galvanischen Element (8) verbunden und andererseits über einen Schalter (4) an die Leuchte (2) anschließbar ist.

2. Fahrradbeleuchtung nach Anspruch 1, d a d u r c h g e k e n n z e i c h n e t , daß das galvanische Element (8) eine Batterie ist.

3. Fahrradbeleuchtung nach Anspruch 1, d a d u r c h g e k e n n z e i c h n e t , daß das galvanische Element (8) ein Akkumulator ist.

4. Fahrradbeleuchtung nach einem der Ansprüche 1 - 3, d a d u r c h g e k e n n z e i c h n e t , daß die Verbindung (3) zwischen Dynamo (1) und Leuchte (2) über den Schalter (4) geht.

Dresdner Bank Essen (BLZ 360 800 80) 4 011 119   Postscheckkonto Essen (BLZ 360 100 43) 1921 54 430

5. Fahrradbeleuchtung nach einem der Ansprüche 1 - 4, g e k e n n z e i c h n e t   d u r c h  ein elektromagnetisches Relais (6).

6. Fahrradbeleuchtung nach einem der Ansprüche 1 - 4, g e k e n n z e i c h n e t   d u r c h  ein elektronisches Relais (6).

7. Fahrradbeleuchtung nach einem der Ansprüche 1 - 6, d a d u r c h   g e k e n n z e i c h n e t , daß der Dynamo (1) über einen Gleichrichter (12) auch an den Akkumulator angeschlossen ist.

8. Fahrradbeleuchtung nach einem der Ansprüche 1 - 7, g e k e n n z e i c h n e t   d u r c h  zwei Dynamos, von denen der eine die Leuchte (2) und der andere das Relais (6) bzw. den Akkumulator versorgt.

### Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | --- <br> FR-A-1 183 819 (EVIAN) <br><br> * Insgesamt * | 1,2,4, 5 | B 62 J 5/00 |
| X | --- <br> DE-A-2 818 744 (WIEBE) <br><br> * Insgesamt * | 1,3,5, 7 | |
| P,X | --- <br> DE-A-3 031 079 (HINÜBER) <br><br> * Insgesamt * | 1,3,5, 7 | |
| Y | --- <br> DE-A-2 941 061 (UNION) <br><br> * Figuren 1-3 * | 1,2,4, 6,7 | |
| Y | --- <br> DE-A-2 744 347 (PRECHTL) <br> * Figuren * | 1-5 | RECHERCHIERTE SACHGEBIETE (Int. Cl. ³) <br><br> B 62 J 5/00 |
| Y | --- <br> DE-A-2 110 024 (ATZLER) <br><br> * Figuren * | 1,2,4, 5 | |
| Y | --- <br> FR-A- 901 557 (SOCIETE D'APPLICATIONS ET DE FABRICATIONS INDUSTRIELLES S.A.F.I.) <br> * Insgesamt * | 1,2,4, 5,7 | |

--- -/-

Der vorliegende Recherchenbericht wurde für alle Patentansprüche erstellt.

| Recherchenort <br> DEN HAAG | Abschlußdatum der Recherche <br> 31-01-1983 | Prüfer <br> ONILLON C.G.A. |
|---|---|---|

# 0078877
Nummer der Anmeldung

**EUROPÄISCHER RECHERCHENBERICHT**

Europäisches Patentamt

EP 82 10 4102

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-2 519 837  (ELBERSKIRCH) <br> * Figuren 1,2 * <br><br> ----- | 1-4,6 | |

RECHERCHIERTE SACHGEBIETE (Int. Cl. 3)

Der vorliegende Recherchenbericht wurde für alle Patentansprüche erstellt.

| Recherchenort | Abschlußdatum der Recherche | Prüfer |
|---|---|---|
| DEN HAAG | 31-01-1983 | ONILLON C.G.A. |